# EUROPÄISCHE PATENTSCHRIFT

(11) **EP 3 546 900 B1**
(45) Veröffentlichungstag und Bekanntmachung des Hinweises auf die Patenterteilung: **07.06.2023**
(21) Anmeldenummer: 19166251.9
(22) Anmeldetag: 29.03.2019
(51) Int. Cl.: G01G 21/22, G09F 1/00, G01G 23/36, G09F 13/04, G01G 19/44

(54) **WAAGE MIT SCHALTELEMENTEN IN FORM VON NÄHERUNGSSENSOREN**
SCALE WITH SWITCHING ELEMENTS IN THE FORM OF PROXIMITY SENSORS
BALANCE AVEC INTERRUPTEURS DE PROXIMITE

(30) Priorität: 29.03.2018 DE 202018101793 U
(43) Veröffentlichungstag der Anmeldung: 02.10.2019
(73) Patentinhaber: Leifheit AG, 56377 Nassau (DE)
(72) Erfinder: BOSSCHER, Eric, 56379 Obernhof (DE)
(74) Vertreter: btb IP Bungartz Baltzer Partnerschaft mbB Patentanwälte

(56) Entgegenhaltungen:
- EP-A1- 2 565 597

## Beschreibung

Die Erfindung betrifft eine Waage nach dem Oberbegriff des Anspruchs 1. Insbesondere betrifft die Erfindung eine Waage mit einem an der Waage oder einem mit der Waage über eine Datenübertragung kommunizierenden Display als Anzeigevorrichtung zum Anzeigen eines Messwertes, einer Tragplatte, zumindest einer Wägezelle und zumindest einem Schaltelement. Weiterhin weist die Waage ein Bedienfeld mit ein oder mehreren Bereichen zur Eingabe von Benutzerbefehlen auf.

Unter den gattungsgemäßen Waagen werden - ohne dass die Erfindung hierauf beschränkt sein soll - insbesondere Personenwaagen oder Küchenwaagen und insbesondere die üblicherweise verwendeten, über Solarzellen oder Batterien mit Energie versorgten Waagen verstanden.

Personen- oder Küchenwaagen weisen neben einer konventionellen Wiegefunktion zunehmend auch weitere Funktionsmöglichkeiten auf. Beispielsweise können dies Differenz- oder Additionsfunktionen, die Messung des Körperfettanteils oder aber auch die Interaktion der Waage mit weiteren elektronischen Geräten, insbesondere auch Tablets und Smartphones, sein. Für die Nutzung der weiteren Funktionsmöglichkeiten sind neben einem Schalter zum Ein- und Ausschalten der Waage auch weitere Eingabefelder in Form eines Bedienfeldes an den Waagen vorgesehen.

Aus der DE 10 2007 031 380 A1 ist eine Waage mit einer Wiegefläche bekannt, wobei die Wiegefläche unterschiedliche Positionen aufweist, denen jeweils unterschiedliche Eingabeoptionen zugeordnet sind. Die Eingabeoptionen können durch Berühren ausgewählt werden, wobei eine elektronische Kontrolleinheit die Position der Berührung ermittelt und der ausgewählten Eingabeoption zuordnet.

Aus der DE 10 2005 039 953 A1 ist eine Waage mit einem Display zur Anzeige eines Messwertes bekannt, wobei das Display eine dunkel, vorzugsweise schwarz, eingefärbte Scheibe aufweist, hinter der zum Leuchten aktivierbare Leuchtelemente angeordnet sind, die im Falle der Aktivierung so stark leuchten, dass von den Leuchtelementen ausgehendes Licht durch die Scheibe hindurch mit bloßem Auge wahrnehmbar ist.

Aus der EP 2 565 597 A1 ist eine Waage mit einer Tragplatte, einer Anzeigevorrichtung zur Anzeige eines Messwertes und mit einem Schalter zur Bedienung einer Funktion der Waage bekannt, wobei der Schalter eine Elektrode aufweist, die oberhalb der Anzeigevorrichtung angeordnet ist.

Eine Waage, die über einen kapazitiven Näherungsschalter eingeschaltet werden kann, ist aus der EP 1 371 954 A1 bekannt. Bei dieser Waage ist unterhalb der Tragplatte eine Elektrode angeordnet, die die Umgebungskapazität überwacht. Zum Einschalten der Waage nähert sich der Benutzer mit einem Körperteil, insbesondere einem Finger oder einer Fußspitze, dieser Elektrode, so dass bei hinreichend geringem Abstand die an der Elektrode gespeicherte Ladung abfließt. Die Elektronik interpretiert dann diesen Ladungsabfluss als Schaltsignal. Dabei ist es unerheblich, ob der Sensor so eingestellt ist, dass der Benutzer die Tragplatte berühren muss oder ob bereits vorher, bei bloßer Annäherung ohne Berührung der Ladungsabfluss als ausreichend groß zum Einschalten der Waage interpretiert wird. Zum Schalten wird lediglich der Eintritt der Leitfähigkeit des von der Elektrode der Waage und dem Finger gebildeten Kondensators genutzt.

Bei der Entwicklung von Waagen der gattungsgemäßen Art besteht ein ständiges Bedürfnis, die Attraktivität der Waage und die Funktionalität bei gleichzeitig möglichst geringen, zusätzlichen Fertigungskosten zu verbessern bzw. zu erweitern.

Aufgabe der vorliegenden Erfindung ist es daher, eine leicht zu bedienende Waage zu schaffen, die ein besonders ansprechendes Erscheinungsbild hat, kostengünstig herstellbar ist und bei attraktivem Design eine hohe Funktionalität aufweist.

Diese Aufgabe wird nach der Erfindung durch eine Waage nach Anspruch 1 gelöst.

Das Bedienfeld so ausgebildet, dass es Schaltelemente in Form von Näherungssensoren zum Schalten der Funktion oder zur Eingabe der Benutzerbefehle durch Annähern oder Berühren der Bereiche eines Bedienfeldes durch den Benutzer aufweist. Zur Kenntlichmachung der Lage und bzw. oder der Funktion dieser Bereiche sind Zeichen vorhanden, die zumindest bei aktivem Bedienfeld auf dem Bedienfeld erkennbar sind.

Der Grundgedanke der Erfindung setzt sich aus zwei Überlegungen zusammen, die auch unabhängig voneinander als Gegenstand einer selbständigen Erfindung angesehen werden. Zum einen werden über die Näherungssensoren Bedienfelder aufgebaut, über die die Waage bedient werden kann. Bedienen heißt in Ergänzung zum oben genannten Stand der Technik nicht das Einschalten der Waage, sondern auch die Betätigung weiterer Funktionen und auch das Ausschalten der Waage nach dem Gebrauch. Funktionen, die über eine solche Technik schaltbar sind, können das Auslösen der Tara-Funktion, die Eingabe einer Körpergröße oder des Alters bei einer Körperanalyse-Waage oder auch jede andere Funktion sein. Ein zweiter Aspekt der Erfindung betrifft die Visualisierung der Eingabebereiche und deren Funktion der Bedienfelder.

Die erfindungsgemäßen Bedienfelder können im Bereich der Tragplatte, insbesondere durch darunter angeordnete Näherungssensoren in Form von Elektroden, aber auch im Bereich eines Gehäuses oder einer sonstigen Stelle der Waage angeordnet sein. Dem Benutzer werden die jeweiligen Funktionen der Bereiche des Bedienfeldes angezeigt, dies kann über feste Markierungen, die beispielsweise auf das Gehäuse oder die Tragplatte aufgedruckt sein können, erfolgen.

Der Aufbau des Bedienfeldes über Näherungssensoren hat insbesondere den Vorteil, dass hierüber eine Gestensteuerung möglich wird. Während die aus dem Stand der Technik bekannte Gestensteuerung in Kraftfahrzeugen oder in anderen aufwändigeren Systemen den Einsatz von Kameras mit sich bringt, ist dies im Falle einer Waage aufgrund der geringen zur Verfügung stehenden Herstellungskosten üblicherweise nicht möglich. Ein ähnlicher Effekt lässt sich aber nun erfindungsgemäß über die Näherungssensoren erzielen. Hierzu wird die zeitliche Aktivierung räumlich voneinander getrennter Sensoren erfasst. In der Elektronik wiederum ist gespeichert, dass eine zeitlich hintereinanderliegende Aktivierung mehrerer Näherungssensoren einer bestimmten Funktion zugeordnet ist, die dann aktiviert wird.

Das Vorsehen der oben genannten Gestensteuerung erlaubt es zum einen, eine elegante Bedienung zu realisieren. Hierzu kann der Benutzer zum Beispiel von einem zentralen Feld des Bedienfeldes nach außen wischen und so eine gewünschte Funktion auslösen. Zum anderen kann über die Gestensteuerung auch die Funktionsvielfalt erhöht werden. So können mit zwei Elektroden auf diese Weise insgesamt vier verschiedene Funktionen realisiert werden. Einerseits kann der Benutzer jeweils durch Halten eines Fingers oder einer Fußspitze oberhalb einer der Elektroden eine von zwei Grundfunktionen auslösen. Durch Wischen von einer Elektrode zur benachbarten Elektrode in eine erste Richtung kann er eine dritte Funktion und durch Wischen in die entgegengesetzte Richtung eine vierte Funktion aktivieren. Sind mehr als zwei Elektroden vorgesehen, erhöht sich die Vielfalt entsprechend. So ist leicht ersichtlich, dass sich bei zum Beispiel einem Feld von drei mal drei Elektroden, insgesamt also neun Näherungssensoren, eine Vielzahl von Funktionen realisieren lassen. Natürlich ließen sich durch weitere Bewegungsabläufe weitere Funktionen realisieren, wobei dies dann aufgrund der komplexen Bewegungen viele Benutzer überfordern könnte.

Aus dem Stand der Technik ist es bereits bekannt, einem Sensor unterschiedliche Funktionen zuzuordnen, je nachdem, wie lange der Benutzer ihn betätigt. Diese Technik kann genutzt werden, um die Funktionalitäten der Gestensteuerung noch weiter zu erhöhen, indem nicht nur die Richtung der Wischbewegung, sondern auch deren Geschwindigkeit erfasst wird.

Der besondere Vorteil des Aufbaus der oben Bedienfelder liegt darin, dass die Elektroden sehr leicht unterhalb der Tragplatte oder unterhalb eines Gehäuseabschnittes realisiert werden können. Hierzu wird einfach durch Aufkleben von leitfähigen Schichten oder Plättchen oder durch Bedrucken der Unterseite mit einem leitfähigen Material die Elektrode hergestellt, die entweder durch Bedrucken oder durch Kabel kontaktiert werden kann. Dies erlaubt es auf einfache Weise eine Funktion, die einem Touch-Panel ähnlich ist, umzusetzen. Ein solches Touch-Panel oder ein Touch-Screen, wie er von tragbaren Computern oder Smartphones bekannt ist, ist derzeit noch ein zu kostspieliges Bauteil, das darüber hinaus aufgrund seiner Empfindlichkeit den Umgebungsbedingungen einer Küchenwaage oder einer Personenwaage oft nicht gewachsen ist. Daher lässt es sich bei vielen Anwendungen einer Waage nicht in den zur Verfügung stehenden Kostenrahmen integrieren. Die Erfindung schafft nun eine ähnliche Funktion mit besonders einfachen Mitteln.

Ein weiterer Aspekt der Näherungssensoren kann darin bestehen, dass die aus dem Stand der Technik bekannten Sensoren mit vergleichsweise geringer Ladung beschickt werden müssen, da sie ja dem Einschalten der Waage dienen. Sofern hier eine zu große Ladung aufgebracht würde, würde entweder die Kapazität der Batterien oder der Solarzellen nicht ausreichend sein, um eine dauerhafte Funktion bereitstellen zu können. Daher müssen solche Sensoren üblicherweise so ausgeführt werden, dass der Benutzer den Elektroden sehr nahe kommen muss, um den erforderlichen Ladungsabfluss zu bewirken.

Sensoren, die nicht dem Einschalten der Waage dienen, müssen dagegen nicht dauerhaft mit Ladung beschickt werden. So kann nach dem Einschalten der Waage die Elektronik dafür Sorge tragen, dass die Näherungssensoren mit einer höheren Ladungsdichte beschickt werden, so dass sich bei eingeschalteter Waage eine Funktion der Näherungssensoren ergibt, die eine geringere Annäherung und damit eine leichtere Gestensteuerung ermöglicht. Daher besteht ein Aspekt der Erfindung auch darin, dass die Empfindlichkeit der Sensoren nach dem Einschalten der Waage erhöht wird.

Diese Waage ist weiterhin dadurch charakterisiert, dass die Tragplatte zumindest abschnittsweise, vorzugsweise an den ein oder mehreren Bereichen zur Eingabe von Benutzerbefehlen, transluzent ausgebildet ist und unterhalb der Tragplatte Leuchtmittel in Form von einem oder mehreren Leuchtelementen vorgesehen sind. Die Leuchtelemente können unmittelbar oder auch mittelbar in Verbindung mit ein oder mehreren Lichtleitern an den ein oder mehreren Bereichen des Bedienfeldes zur Eingabe von Benutzerbefehlen definierte Zeichen abbilden, wobei im letztgenannten Fall die Lichtleiter unterhalb der Tragplatte angeordnet sein können.

Um die Gestensteuerung zu realisieren, können verschiedene Sensoren aufgebaut werden. Wichtig hierfür ist lediglich die Tatsache, dass die Elektronik in der Lage ist, den zeitlichen Ablauf der Aktivierung und die Lage der vom Benutzer aktivierten Sensoren zu erfassen. Die Näherungssensoren können dann von einzelnen Elektroden gebildet sein, die nebeneinander oder übereinander angeordnet sind, auch eine ringförmige Anordnung ist natürlich möglich. Die Sensoren selbst können von quadratischen, rechteckigen, ruhenden, Kreissegment vermengen oder Kreis ringförmigen Elektroden gebildet sein.

Erfindungsgemäß weist die Waage zumindest ein Bedienfeld auf. Natürlich können auch mehrere Bedienfelder vorgesehen sein. Diese können sich über den gesamten Bereich der Tragplatte, über einen Teilbereich eines Gehäuseteils, insbesondere wenn dieser seitlich oder nach vorne bzw. hinten aus dem Bereich der Tragplatte hervorsteht, angeordnet werden.

Nach dem zweiten Grundgedanken der Erfindung ist die Waage auch dadurch charakterisiert, dass die Tragplatte oder der Bereich der Waage, der ein Bedienfelder beinhaltet, zumindest abschnittsweise, vorzugsweise an den ein oder mehreren Bereichen zur Eingabe von Benutzerbefehlen, transluzent ausgebildet ist und unterhalb der Tragplatte Leuchtmittel in Form von einem oder mehreren Leuchtelementen vorgesehen sind. Die Leuchtelemente können unmittelbar oder auch mittelbar in Verbindung mit ein oder mehreren Lichtleitern an den ein oder mehreren Bereichen des Bedienfeldes zur Eingabe von Benutzerbefehlen definierte Zeichen abbilden, wobei im letztgenannten Fall die Lichtleiter unterhalb der Tragplatte angeordnet sein können. Alternativ können Lichtleiter auch von der Tragplatte selbst gebildet sein, wobei dann Licht einer LED zum Beispiel seitlich eingekoppelt wird, dass sich an definierten Störstellen bricht und so als Zeichen in Form einer Linie oder eines Symbols erscheint. Eine solche Technik ist beispielsweise für an den Rändern der Tragplatte austretendes Licht in der EP 1 862 784 A1 beschrieben. Die Technik, seitlich Licht in eine transluzente Platte einzukoppeln und dann Zeichen oder Buchstaben über Störstellen auf einer transluzenten Platte abzubilden, ist in der DE 203 11 556 U1 beschrieben und kann in der beschriebenen Ausgestaltung auch für die vorliegende Erfindung genutzt werden.

Insbesondere dann, wenn ein oder mehrere Bedienfelder im Bereich der Tragplatte angeordnet sind, ergibt sich eine besonders attraktive Gestaltungsmöglichkeit der Waage. Durch Anordnen der Näherungssensoren unterhalb der Tragplatte und durch optisches Kenntlichmachen die jeweiligen Funktionen über die Beleuchtung der Tragplatte im oben beschriebenen Sinne kann auf einfache Weise eine im ausgeschalteten Zustand schlichte Erscheinungsform der Waage realisiert werden, ohne auf die beschriebene Funktionsvielfalt verzichten zu müssen. Im Gegenteil, durch das hintergrundbeleuchtete Bedienfeld entsteht ein äußerst attraktiver Gesamteindruck.

Die Leuchtstärke der Leuchtelemente ist bevorzugt derart ausgebildet, dass durch die Leuchtelemente emittiertes Licht durch die ein oder mehreren transluzenten Bereiche der Tragplatte hindurchzutreten vermag und die Zeichen von einem Benutzer der Waage äußerlich bei Betrachten der Tragplatte erkennbar sind. Die Leuchtelemente sind dabei zumindest über das Schaltelement an- und ausschaltbar.

Bevorzugt ist die Tragplatte so ausgebildet, dass der Bereich unterhalb der Tragplatte ohne Aktivierung der Leuchtmittel nicht sichtbar ist. Dies kann dadurch erfolgen, dass die Tragplatte wie im Falle der aus der 10 2005 039 953 A1 bekannten Waage dunkel eingefärbt ist, jedoch die Bedruckung so erfolgt, dass die Farbe über zueinander beabstandete Pixel aufgetragen wird, zwischen denen Licht durchtreten kann, die aber so nah beieinander liegen, dass ohne Licht der Leuchtmittel die Tragplatte undurchsichtig erscheint. Dieser Effekt lässt sich nicht nur mit dunkler Farbe, sondern auch mit jeder anderen Farbe erzielen. Alternativ kann die Tragplatte auch als transparente, aber nicht durchsichtige Scheibe ausgebildet sein.

Eine weitere Möglichkeit, den Bereich unter der Tragplatte weitgehend unsichtbar zu gestalten, besteht darin, dass die Tragplatte mit Ausnahme der transluzenten Bereiche vollflächig zu bedrucken oder anderweitig zu beschichten. Dann entsprechen die transluzenten Bereiche in der Form der gewünschten Darstellung der Zeichen, während bei der im vorherigen Absatz geschilderten Technik die Zeichen unterhalb der Tragplatte ausgebildet werden und durch die Tragplatte sichtbar sind.

Unter Transluzenz sind alle Abstufungen von Lichtdurchlässigkeit bis hin zur Transparenz oder gar Durchsichtigkeit zu verstehen. Die ein oder mehreren transluzenten Bereiche sind dabei von der Lichtdurchlässigkeit entsprechend derart zu gestalten, dass die Formgebung der Zeichen des Bedienfeldes für den Benutzer der Waage gut erkennbar bei eingeschalteten Leuchtelementen erscheinen.

Bevorzugt können die Leuchtelemente selbst oder über die Lichtleiter definierte Leuchtmuster ausbilden, wobei die Leuchtmuster der Formgebung der Zeichen entsprechen. Dabei wird die Tragplatte derart beschichtet, dass zumindest in den Bereich des Bedienfeldes das von den Leuchtelementen emittierte Licht zur Oberseite der Waage hindurchzutreten vermag. Hierbei wird eine besonders ansprechende Optik dadurch erreicht, dass die transluzenten Bereiche nur so transluzent bzw. durchsichtig sind, dass die Leuchtelemente und/oder die optionalen Lichtleiter im ausgeschalteten Zustand optisch nicht zu erkennen sind.

Alternativ oder zusätzlich können die transluzenten Bereiche der Tragplatte die Formgebung der Zeichen aufweisen. Insbesondere sind die transluzenten Bereiche der Tragplatte derart ausgestaltet, dass durch ein Hinterleuchten der Tragplatte durch die Leuchtelemente, die jeweilige Formgebung der Zeichen an der Oberfläche der Tragplatte sichtbar gemacht ist. Die Lichtverteilung und Lichtintensität der Leuchtelemente für das Hinterleuchten der Tragplatte ist durch die Anordnung der Leuchtelemente beeinflussbar. Vorzugsweise wird dies durch die Anordnung und Ausrichtung der Lichtleiter unterstützt. Insbesondere ist eine homogene Lichtverteilung unterhalb der ein oder mehreren transluzenten Bereiche gewünscht.

Bevorzugt ist auch die restliche Tragplatte oder zumindest Teile von dieser außerhalb der ein oder mehreren transluzenten Bereiche des Bedienfeldes transluzent ausgeführt. Dabei ist bei der restlichen Tragplatte oder zumindest Teilen dieser im Vergleich zu den ein oder mehreren transluzenten Bereiche des Bedienfeldes eine geringere Transluzenz vorgesehen, so dass die jeweilige Formgebung der Zeichen im Bedienfeld trotzdem gut erkennbar ist. Auf diese Weise kann die ganze Tragplatte beleuchtet werden, was wiederum die Möglichkeit mit sich bringt, optisch besonders ansprechende Waagendesigns zu schaffen. Die Tragplatte und die ein oder mehreren transluzenten Bereiche des Bedienfeldes sind bevorzugt verschiedenfarbig ausgeführt.

Als Leuchtelemente werden bevorzugt LEDs, OLEDs, Leuchtfolien, -flächen und/oder - bänder eingesetzt. Vorzugsweise wird die Transluzenz der Tragplatte durch eine Beschichtung der Tragplatte erreicht. Das Aufbringen der Beschichtung erfolgt bevorzugt im Siebdruckverfahren, wobei die ein oder mehreren transluzenten Bereiche in der Beschichtung ausgebildet sind. Die Bedruckung wird bevorzugt auf der Unterseite der Tragplatte erfolgen, wobei auch oder zusätzlich eine Beschichtung der Oberseite möglich ist, insbesondere wenn über eine ITU-Beschichtung die Ausbildung von elektrischen Schaltern gewünscht ist.

Die Aktivierung der Leuchtelemente und damit auch das Hindurchtreten des emittierten Lichts durch die ein oder mehreren transluzenten Bereiche der Tragplatte erfolgt über ein Schaltelement. Das Schaltelement kann dabei Teil des Bedienfeldes sein oder beispielsweise auch dem Bedienfeld überlagert sein. Die Betätigung des Schaltelements ist bevorzugt berührungslos, insbesondere über einen kapazitiven Sensor, realisiert. Denkbar sind aber auch andere Möglichkeiten der berührungslosen oder berührungsinduzierten Betätigung durch den Benutzer. So kann die Aktivierung beispielsweise auch resistiv, induktiv, durch das Erfassen von Vibrationen oder durch die Auslenkung einer Wägezelle erfolgen. Natürlich ist auch ein konventioneller mechanischer Schalter einsetzbar.

Den ein oder mehreren Bereichen des Bedienfeldes sind bevorzugt Eingabefunktionen zugeordnet und die Eingabe der Benutzerbefehle wird entsprechend der Eingabefunktionen von einer Auswerteelektronik weiterverarbeitet.

Um dem Benutzer der Waage die den ein oder mehreren Bereichen zugeordneten Funktionen kenntlich zu machen, entspricht die Formgebung der Zeichen bevorzugt den Symbolen der den ein oder mehreren Bereichen zugeordneten Funktionen des Bedienfeldes.

Die Anordnung und Verteilung der ein oder mehreren Bereiche zur Eingabe von Benutzerbefehlen kann beliebig über der Tragplatte verteilt sein. Auch die Anzahl der Bereiche zur Eingabe von Benutzerbefehlen ist entsprechend des gewünschten Waagenkonzeptes und Waagendesigns anpassbar. So können die ein oder mehreren Bereiche zur Eingabe von Benutzerbefehlen auch das Layout einer Tastatur ausbilden.

Weiterhin sind bei der Waage auch Mittel zum Erfassen der Eingabe der Benutzerbefehle vorgesehen. Die Mittel erfassen dabei eine Betätigung der ein oder mehreren Bereiche des Bedienfeldes durch den Benutzer als Eingangsgröße und verarbeiten die Eingangsgröße über eine Elektronik entsprechend der in einem Eingabebereich hinterlegten Funktion und/oder werten diese aus.

Die Mittel zum Erfassen der Eingabe von Benutzerbefehlen sind bevorzugt aktivierbar ausgeführt. Dabei kann eine Aktivierung unabhängig vom Einschalten der Leuchtelemente vorgesehen sein.

Die Aktivierung der Mittel zum Erfassen der Eingabe der Benutzerbefehle erfolgt bevorzugt über das Schaltelement mit dem Anschalten der Beleuchtung. Alternativ kann die Aktivierung über eine erneute Betätigung des Schaltelements realisiert sein. Auch kann das Schaltelement ein Teil des Bedienteils sein und/oder eine weitere Anschalttaste vorgesehen sein, über welche die Aktivierung der Mittel zum Erfassen der Eingabe der Benutzerbefehle und damit auch die Aktivierung des Bedienfeldes bewirkt sind.

In einer bevorzugten Ausführungsform weist die Waage mindestens zwei Wägezellen auf. Dabei bilden die Wägezellen und eine Auswertelektronik die Mittel zum Erfassen der Eingabe von Benutzerbefehlen. Die Bestimmung einer Position der Eingabe durch den Benutzer auf der Oberfläche der Tragplatte erfolgt über die Wägezellen und die Auswerteelektronik.

Alternativ kann die zuvor bei dem Schaltelement beschriebene Sensorik als Mittel zum Erfassen der Eingabe von Benutzerbefehlen eingesetzt werden. Insbesondere sind hierbei kapazitive Sensoren einsetzbar. Diese können wirtschaftlich, insbesondere auf die Unterseite der Tragplatte gedruckt werden und sind optisch unauffällig.

Die zuvor beschriebenen Merkmale und Ausführungsformen sind insbesondere für die Offenlegungsschriften DE 10 2005 039 953 A1 und DE 10 2007 031 380 A1 dargelegten Ausgestaltung von Waagen angedacht, deren Kombination ebenfalls mögliche Ausführungsform der Erfindung bilden und deren Inhalt durch Verweis in diese Beschreibung aufgenommen sein soll.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine erste Ausführungsform einer beleuchteten Waage mit Bedienfeld,
- Fig. 2: eine Ausführungsform der Tragplatte der Waage aus Fig. 1 mit transluzenten Bereichen und lichtundurchlässigen Bereichen und
- Fig. 3: eine weitere Ausführungsform der Tragplatte der Waage aus Fig. 1 mit transluzenten Bereichen und lichtundurchlässigen Bereichen.

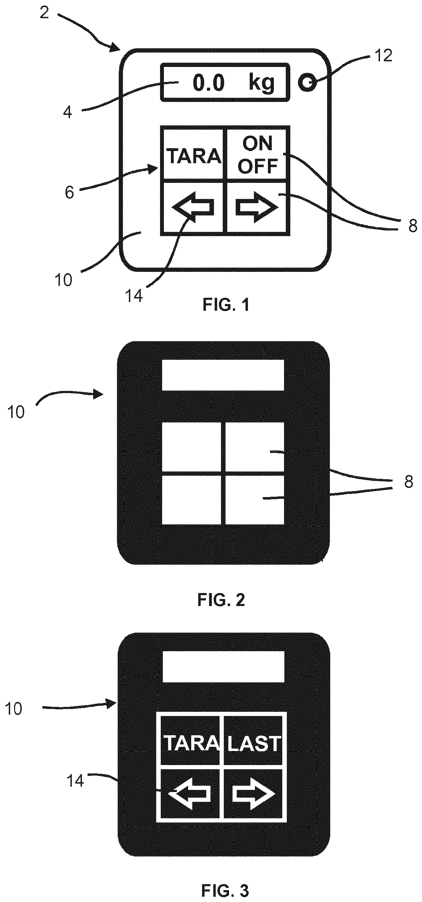

Figur 1 zeigt eine erste Ausführungsform einer Waage 2 mit beleuchtetem Bedienfeld 6 in einer Draufsicht. Das Bedienfeld 6, ein Display 4 zum Anzeigen von Messwerten und eine hier als kapazitiver Näherungsschalter ausgeführte Schaltvorrichtung 12 befinden sich auf der Tragplatte 10 der Waage 2. Das Bedienfeld 6 weist in der dargestellten Ausführungsform vier als Eingabefelder ausgebildete Bereiche zur Eingabe von Benutzerbefehlen 8 auf, innerhalb derer Zeichen 14 sichtbar sind, welche die hinterlegten Funktionen graphisch darstellen.

Die Zeichen 14 innerhalb des Bedienfeldes 6 und vorzugsweise auch die Umrandung des Bedienfeldes 6 sind beleuchtbar ausgeführt. Die Beleuchtung des Bedienfeldes 6 erfolgt über Leuchtelemente (nicht dargestellt), die unterhalb der Tragplatte 10 angeordnet sind. Die Beleuchtung des Bedienfeldes 6 ist über den kapazitiven Näherungsschalter, über den auch die Waage 2 eingeschaltet werden kann, an- und ausschaltbar. Auf diese Weise kann die Waage 2 beispielsweise vollständig eben ausgeführt sein, ohne dass ein teures Display 4 unterhalb von Teilen der Tragplatte 10 vorgesehen sein muss, welches das Bedienfeld 6 kenntlich macht. Dies führt neben geringen Kosten auch zu einem besonders ansprechenden Äußeren der Waage 2. Weiterhin kann die Waage 2 leichter gereinigt werden und Funktionsbeeinträchtigungen durch eintretendes Wasser oder Verschmutzungen durch die ebene geschlossene Oberfläche vermieden werden.

In Figur 2 ist ein Ausschnitt einer ersten Ausführungsform der Tragplatte 10 der Waage 2 aus Figur 1 mit transluzenten Bereichen 8 und lichtundurchlässigen Bereichen zu sehen. Die transluzenten Bereiche sind im Bereich des Bedienfeldes 6 und des Displays 4 angeordnet und sind zumindest im Bereich des Bedienfeldes 6 derart ausgebildet, dass darunter liegende Leuchtelemente oder auch Lichtleiter für einen Benutzer der Waage 2 nicht oder nur schlecht sichtbar sind.

Bei einer erfindungsgemäßen Waage 2 mit der dargestellten Ausführungsform der Tragplatte 10 ist die Formgebung der Zeichen 14 der hinterlegten Funktionen des Bedienfeldes 6 durch die Leuchtelemente als solche und/oder über zusätzliche Lichtleiter gebildet.

Figur 3 zeigt eine weitere Ausführungsform der Tragplatte 10 der Waage 2 aus Figur 1 mit transluzenten Bereichen 8 und lichtundurchlässigen Bereichen. Die transluzenten Bereiche 8 bilden die Formgebung der Zeichen 14 der hinterlegten Funktionen des Bedienfeldes 6.

Die Leuchtelemente (nicht dargestellt) müssen in diesem Fall nicht selbst die Formgebung der Zeichen 14 ermöglichen. Sie sind bevorzugt derart anzuordnen, dass die transluzenten Bereiche möglichst homogen hinterleuchtet sind.

### Bezugszeichenliste:

- 2: Waage
- 4: Display
- 6: Bedienfeld
- 8: Bereiche zur Eingabe von Benutzerbefehlen
- 10: Tragplatte
- 12: Schaltvorrichtung
- 14: Zeichen

## Patentansprüche

1. Waage (2) mit
• einer Tragplatte (10) zur Aufnahme einer zu wiegenden Masse,
• einer Sensorik zur Ermittlung wenigstens eines Messsignals, die zumindest eine Wägezelle und eine Elektronik zur Bestimmung eines ausgebbaren Messwertes aus dem Messsignal umfasst und den Messwert an einer Schnittstelle für eine interne oder externe Ausgabevorrichtung in Form eines Displays (4) bereitzustellen vermag,
• einer Schaltvorrichtung (12) zum Einschalten der Waage (2) und/oder zum Aktivieren oder Deaktivieren einer sonstigen Funktion der Waage (2) und mit
• wenigstens einem Bedienfeld (6), das Schaltelemente zum Schalten von Funktionen der Waage (2) oder zum Eingeben von Benutzerbefehlen und Bereiche (8) umfasst, die den Schaltelementen zur Eingabe von Benutzerbefehlen zugeordnet sind,
**dadurch gekennzeichnet, dass**
das außerhalb der von dem Display (4) gebildeten Anzeigevorrichtung angeordnete Bedienfeld (6) Schaltelemente in Form von Näherungssensoren zum Schalten der Funktion oder zur Eingabe der Benutzerbefehle durch Annähern oder Berühren der Bereiche (8) durch den Benutzer aufweist und zur Kenntlichmachung der Lage und/oder Funktion der Bereiche (8) Zeichen (14) vorhanden sind, die zumindest bei aktivem Bedienfeld (6) auf dem Bedienfeld (6) erkennbar sind, wobei das Bedienfeld (6) an einem zumindest abschnittsweise transluzent ausgebildeten Abschnitt eines Gehäuses der Waage (2) oder der Tragplatte (10) angeordnet ist und unterhalb des Bedienfeldes (6) über die Schaltvorrichtung (12) oder über eines der Schaltelemente des Bedienfeldes (6) aktivierbare Leuchtmittel und/oder Lichtleitungsmittel zur Darstellung der dem Benutzer darzustellenden Zeichen (14) vorgesehen sind, die derart angeordnet und ausgebildet sind, dass sie zur Kenntlichmachung der Lage und/oder einer Funktion des Bereichs (8) oder einem der Bereiche (8) über durch die transluzenten Abschnitte der Tragplatte (10) hindurchtretendes und von einem Benutzer erkennbares Licht die Zeichen (14) darzustellen vermögen, ohne dass ein Display (4) unterhalb des Teils der Tragplatte (10) vorgesehen ist, der das Bedienfeld (6) kenntlich macht.

2. Waage (2) nach Anspruch 1, **dadurch gekennzeichnet, dass** die Leuchtmittel von einem oder mehreren Leuchtelementen gebildet sind, die unmittelbar und/oder in Verbindung mit einem oder mehreren Lichtleitern mittelbar an dem Bereich (8) die Zeichen (14) abbilden und die selbst definierte Leuchtmuster ausbilden oder die über zu dem Bereich (8) führende Lichtleiter im Bereich (8) definierte Leuchtmuster ausbilden, wobei die Leuchtmuster der Formgebung der Zeichen (14) entsprechen.

3. Waage (2) nach einem der vorherigen Ansprüche, **dadurch gekennzeichnet, dass** zur Bildung einer Gestensteuerung wenigstens ein Bedienfeld (6) vorgesehen ist, das mehr als zwei Schaltelemente räumlich in unterschiedlichen Richtungen zueinander angeordnete Schaltelemente aufweist, wobei die Elektronik derart ausgebildet ist, dass es die zeitlich hintereinander vorgenommene Betätigung verschiedener Schaltelemente des Bedienfeldes (6) zeitdiskret und hinsichtlich der Lage der jeweiligen Schaltelemente zu erfassen und in einen in der Elektronik vordefinierten, der zeitlichen Abfolge der Betätigung und der jeweiligen Lage verschiedener Schaltelemente zugeordneten Befehl umzusetzen vermag.

4. Waage (2) nach dem vorherigen Anspruch, **dadurch gekennzeichnet, dass** ein Zeichen (14) als Ausgangspunkt für ein zeitlich hintereinander liegendes Betätigen der Schaltelemente gekennzeichnet ist.

5. Waage (2) nach einem der vorherigen Ansprüche, **dadurch gekennzeichnet, dass** die Bedienfelder (6) nebeneinander und übereinander angeordnete Näherungssensoren aufweisen, wobei die Zeichen (14) oberhalb eines oder, wenn zur Aktivierung oder Deaktivierung einer Funktion der Waage (2) eine Gruppe mehrerer Näherungssensoren zeitgleich oder hintereinander zu betätigen ist, oberhalb dieser Gruppe angeordnet sind.

6. Waage (2) nach einem der vorherigen Ansprüche, **dadurch gekennzeichnet, dass** die Näherungssensoren jeweils von einer ober- oder unterhalb des Bedienfeldes (6) angeordneten Elektrode zur Überwachung der Umgebungskapazität gebildet sind.

7. Waage (2) nach dem vorherigen Anspruch, **dadurch gekennzeichnet, dass** wenigstens ein Bedienfeld (6) um einen zentralen inaktiven Punkt herum oder um eine als mittige Elektrode ausgebildeten Näherungssensor herum angeordnete Näherungssensoren in Form von kreissegmentförmigen oder kreisringförmigen Elektroden aufweist.

8. Waage (2) nach einem der vorherigen Ansprüche, **dadurch gekennzeichnet, dass** die Schaltvorrichtung (12) Teil eines Bedienfeldes (6) ist und von einem Schaltelement gebildet ist.

9. Waage (2) nach einem der Ansprüche 1 bis 4, **dadurch gekennzeichnet, dass** die Schaltvorrichtung (12) eine von den Bedienfeldern (6) getrennte, von einem Näherungssensor gebildete Vorrichtung ist.

10. Waage (2) nach einem der beiden vorherigen Ansprüche, **dadurch gekennzeichnet, dass** der die Schaltvorrichtung (12) bildende Näherungssensor im zumindest ausgestalteten Zustand der Waage (2) eine geringere Empfindlichkeit aufweist, als die Näherungssensoren im eingeschalteten Zustand der Waage (2).

11. Waage (2) nach einem der vorherigen Ansprüche, **dadurch gekennzeichnet, dass** die transluzenten Bereiche der Tragplatte (10) derart ausgestaltet sind, dass durch ein Hinterleuchten der Tragplatte (10) durch die Leuchtelemente, die jeweilige Formgebung der Zeichen (14) an der Oberfläche der Tragplatte (10) sichtbar gemacht ist, wobei die Anordnung der Leuchtelemente nur eine Homogenität und die Leuchtstärke beeinflusst und die Tragplatte (10) von hinten hinterleuchtet und mit Ausnahme der transluzenten Abschnitte lichtdicht beschichtet, insbesondere bedruckt ist, und die transluzenten Abschnitte die Form der Zeichen (14) aufweisen.

12. Waage (2) nach einem der vorherigen Ansprüche, **dadurch gekennzeichnet, dass** die Waage (2) wenigstens drei, bevorzugt vier Wägezellen und mehrere Bereiche (8) aufweist, wobei die Eingabe eines Benutzerbefehls über einen lokal ausgeübten Druck auf die Bereiche (8) und eine rechnerische Bestimmung des betroffenen Bereichs (8), in dem der Druck aufgetreten ist, über die jeweiligen Signale der Wägezellen berechnet wird und über die Leuchtmittel die Bereiche (8) durch Anzeige von Bereichsgrenzen in Form von als Markierungen ausgebildeten Zeichen (14) und/oder deren zugeordnete Funktion durch Anzeige des als Symbol oder Buchstaben ausgebildeten Zeichens (14) dargestellt werden.

13. Waage (2) nach einem der vorherigen Ansprüche, **dadurch gekennzeichnet, dass** Mittel zum Erfassen der Eingabe von Benutzerbefehlen vorgesehen sind, die eine Berührung oder Betätigung der ein oder mehreren Bereiche (8) des Bedienfeldes (6) durch den Benutzer als Eingangsgröße erfassen und die Eingangsgröße über eine Auswerteelektronik entsprechend der in einem Eingabebereich hinterlegten Funktion auswerten und/oder weiterverarbeiten, wobei die Mittel zum Erfassen der Eingabe von Benutzerbefehlen aktivierbar sind und eine Aktivierung unabhängig vom Einschalten der Leuchtelemente vorgesehen sein kann.

14. Waage (2) nach einem der vorherigen Ansprüche, **dadurch gekennzeichnet, dass** die Leuchtmittel das Licht über einen Lichtleiter übertragen, der von der Tragplatte (10) gebildet ist, die Leuchtmittel in oder seitlich zur Tragplatte (10) vorgesehen sind und Licht in die Tragplatte (10) bei aktiviertem Leuchtmittel eingekoppelt ist, wobei die Tragplatte (10) zur Darstellung des Zeichens (14) definierten Störstellen aufweist, an denen sich das Licht bricht, so dass das Zeichen (14) in Form einer Linie oder eines Symbols darstellbar ist.

## Claims

1. Scale (2) with
• a support plate (10) for receiving a mass to be weighed,
• a sensor system for determining at least one measurement signal, which comprises at least one load cell and an electronic system for determining an outputable measurement value from the measurement signal and is capable of providing the measurement value at an interface for an internal or external output device in the form of a display (4),
• a switching device (12) for switching on the scale (2) and/or for activating or deactivating another function of the scale (2), and comprising
• at least one control panel (6) which comprises switching elements for switching functions of the scale (2) or for inputting user commands and zones (8) which are assigned to the switching elements for inputting user commands,
**characterized in that**
the control panel (6) arranged outside the display device formed by the display (4) comprises switching elements in the form of proximity sensors for switching the function or for inputting the user commands by approaching or touching the zones (8) by the user, and markings (14) are present for identifying the position and/or function of the zones (8), which markings are recognizable on the control panel (6) at least when the control panel (6) is active, wherein the control panel (6) is arranged on a section of a housing of the scale (2) or of the support plate (10), which section is embodied translucently at least in sections, and lighting means and/or light emitting means, which can be activated via the switching device (12) or via one of the switching elements of the control panel (6) are provided below the control panel (6) for displaying the markings (14) to be displayed to the user und which are arranged and embodied in such a way that they are capable of displaying the markings (14) for the purpose of identifying the position and/or a function of the zone (8) or one of the zones (8) by means of light which passes through the translucent sections of the support plate (10) and can be recognized by a user, without a display (4) being provided below the part of the support plate (10) which identifies the control panel (6).

2. Scale (2) according to claim 1, **characterized in that** the lighting means are formed by one or more lighting elements which directly and/or in conjunction with one or more light guides indirectly display the markings (14) on the zone (8) and which themselves form defined lighting patterns or which form lighting patterns defined in the zone (8) via light guides leading to the zone (8), the lighting patterns corresponding to the shape of the markings (14).

3. Scale (2) according to one of the previous claims, **characterized in that**, for forming a gesture control, at least one control panel (6) is provided which comprises more than two switching elements arranged spatially in different directions relative to one another, the electronics being designed in such a way that it is able to detect the actuation of different switching elements of the control panel (6) carried out in succession in a time-discrete manner and with respect to the position of the respective switching elements and to convert them into a command which is predefined in the electronics and is assigned to the time sequence of the actuation and the respective position of different switching elements.

4. Scale (2) according to the previous claim, **characterized in that** a marking (14) is indicated as the starting point for a temporally successive actuation of the switching elements.

5. Scale (2) according to one of the previous claims, **characterized in that** the control panels (6) comprise proximity sensors arranged side by side and one above the other, the markings (14) being arranged above one or, if a group of several proximity sensors is to be actuated simultaneously or one after the other in order to activate or deactivate a function of the scale (2), above this group.

6. Scale (2) according to one of the previous claims, **characterized in that** the proximity sensors are each formed by an electrode arranged above or below the control panel (6) for monitoring the ambient capacitance.

7. Scale (2) according to the previous claim, **characterized in that** at least one control panel (6) comprises proximity sensors in the form of circular segment-shaped or circular ring-shaped electrodes arranged around a central inactive point or around a proximity sensor embodied as a central electrode.

8. Scale (2) according to one of the previous claims, **characterized in that** the switching device (12) is part of a control panel (6) and is formed by a switching element.

9. Scale (2) according to one of the claims 1 to 4, **characterized in that** the switching device (12) is a device that is separate from the control panels (6) and is formed by a proximity sensor.

10. Scale (2) according to one of the two preceding claims, **characterized in that** the proximity sensor forming the switching device (12) comprises a lower sensitivity in the at least switched-off state of the scale (2) than the proximity sensors in the switched-on state of the scale (2).

11. Scale (2) according to one of the previous claims, **characterized in that** the translucent zones of the support plate (10) are designed in such a way that, by backlighting of the support plate (10) by the luminous elements, the respective design of the markings (14) on the surface of the support plate (10) is made visible, wherein the arrangement of the luminous elements only influences a homogeneity and the luminous intensity and the support plate (10) is backlit from behind and, with the exception of the translucent sections, is coated in a light-tight manner, in particular printed, and the translucent sections comprise the shape of the markings (14).

12. Scale (2) according to one of the preceding claims, **characterized in that** the scale (2) comprises at least three, preferably four, load cells and a plurality of zones (8), wherein the input of a user command via a locally exerted pressure on the zones (8) and a computational determination of the affected zone (8), in which the pressure has occurred is calculated via the respective signals of the load cells, and the zones (8) are represented via the lighting means by displaying zone boundaries in the form of markings (14) embodied as markings and/or their assigned function by displaying the marking (14) embodied as a symbol or letter.

13. Scale (2) according to one of the previous claims, **characterized in that** means for detecting the input of user commands are provided, which detect a touch or actuation of the one or more zones (8) of the control panel (6) by the user as an input variable and evaluate and/or further process the input variable via evaluation electronics in accordance with the function stored in an input zone, wherein the means for detecting the input of user commands can be activated and activation can be provided independently of the switching-on of the light elements.

14. Scale (2) according to one of the previous claims, **characterized in that** the lighting means transmit the light via a light guide which is formed by the support plate (10), the lighting means are provided in or laterally to the support plate (10) and light is coupled into the support plate (10) when the lighting means are activated, the support plate (10) comprising defined interference points for the representation of the marking (14), at which the light is refracted so that the marking (14) can be represented in the form of a line or a symbol.

## Revendications

1. Balance (2) comprenant
• une plaque de support (10) pour recevoir une masse à peser,
• un système de capteurs pour déterminer au moins un signal de mesure, qui comprend au moins une cellule de pesage et une électronique pour déterminer une valeur de mesure pouvant être délivrée à partir du signal de mesure et qui peut mettre à disposition la valeur de mesure sur une interface pour un dispositif d'affichage interne ou externe sous la forme d'un écran d'affichage (4),
• -un dispositif de commutation (12) pour la mise en marche de la balance (2) et/ou pour l'activation ou la désactivation d'une autre fonction de la balance (2) et comprenant
• au moins un panneau de commande (6) qui comprend des éléments de commutation pour commuter des fonctions de la balance (2) ou pour entrer des commandes d'utilisateur et des zones (8) qui sont associées aux éléments de commutation pour entrer des commandes d'utilisateur,
**caractérisé en ce que**
le panneau de commande (6) disposé à l'extérieur du dispositif d'affichage formé par l'écran (4) comprend des éléments de commutation sous la forme de capteurs de proximité pour la commutation de la fonction ou pour l'entrée des instructions de l'utilisateur par rapprochement ou effleurement des zones (8) par l'utilisateur et, pour faire connaître la position et/ou la fonction des zones (8), il existe des signes (14) qui sont reconnaissables sur le panneau de commande (6) au moins lorsque le panneau de commande (6) est actif, le panneau de commande (6) étant disposé sur une section au moins partiellement translucide d'un boîtier de la balance (2) ou de la plaque de support (10) et des moyens d'éclairage et/ou des moyens de guidage de la lumière pouvant être activés par le dispositif de commutation (12) ou par l'un des éléments de commutation du panneau de commande (6) étant prévus au-dessous du panneau de commande (6) pour représenter les signes (14) à afficher pour l'utilisateur, qui sont disposés et conçus de manière à pouvoir représenter les signes (14) pour signaler la position et/ou une fonction de la zone (8) ou de l'une des zones (8) par l'intermédiaire de la lumière traversant les parties translucides de la plaque de support (10) et reconnaissable par un utilisateur, sans qu'un écran (4) soit prévu sous la partie de la plaque de support (10) qui signale le panneau de commande (6).

2. Balance (2) selon la revendication 1, **caractérisée en ce que** les moyens d'éclairage sont formés par un ou plusieurs éléments lumineux qui reproduisent les signes (14) directement et/ou en liaison avec un ou plusieurs guides de lumière indirectement sur la zone (8) et qui forment eux-mêmes des maquettes lumineux définis ou qui forment des maquettes lumineux définis dans la zone (8) par l'intermédiaire de guides de lumière menant à la zone (8), les maquettes lumineux correspondant à la forme des signes (14).

3. Balance (2) selon l'une des revendications précédentes, **caractérisée en ce que,** pour former une commande gestuelle, il est prévu au moins un panneau de commande (6) qui comprend plus de deux éléments de commutation disposés spatia-lement dans des directions différentes l'un par rapport à l'autre, l'électronique étant conçue de telle manière, qu'elle est en mesure de détecter l'actionnement de différents éléments de commutation du panneau de commande (6), effectué successivement dans le temps, de manière discrète dans le temps et en ce qui concerne la position des éléments de commutation respectifs, et de le convertir en une instruction prédéfinie dans l'électronique, associée à la succession dans le temps de l'actionnement et à la position respective de différents éléments de commutation.

4. Balance (2) selon la revendication précédente, **caractérisée en ce qu'**un signe (14) est désigné comme point de départ pour un actionnement successif dans le temps des éléments de commutation.

5. Balance (2) selon l'une des revendications précédentes, **caractérisée en ce que** les panneaux de commande (6) comprennent des capteurs de proximité juxtaposés et superposés, les signes (14) étant disposés au-dessus d'un ou, si un groupe de plusieurs capteurs de proximité doit être actionné simultanément ou successivement pour activer ou désactiver une fonction de la balance (2), au-dessus de ce groupe.

6. Balance (2) selon l'une des revendications précédentes, **caractérisée en ce que** les capteurs de proximité sont formés chacun par une électrode de surveillance de la capacité ambiante disposée au-dessus ou au-dessous du panneau de commande (6).

7. Balance (2) selon la revendication précédente, **caractérisée en ce qu'**au moins un panneau de commande (6) comprend des capteurs de proximité sous forme d'électrodes en forme de segment de cercle ou d'anneau de cercle disposés autour d'un point central inactif ou autour d'un capteur de proximité réalisé sous forme d'électrode centrale.

8. Balance (2) selon l'une des revendications précédentes, **caractérisée en ce que** le dispositif de commutation (12) fait partie d'un panneau de commande (6) et est formé par un élément de commutation.

9. Balance (2) selon l'une des revendications 1 à 4, **caractérisée en ce que** le dispositif de commutation (12) est un dispositif distinct des panneaux de commande (6) et formé par un capteur de proximité.

10. Balance (2) selon l'une des deux revendications précédentes, **caractérisée en ce que** le capteur de proximité formant le dispositif de commutation (12) comprend, dans l'état au moins déployé de la balance (2), une sensibilité inférieure à celle des capteurs de proximité dans l'état allumé de la balance (2).

11. Balance (2) selon l'une des revendications précédentes, **caractérisée en ce que** les zones translucides de la plaque de support (10) sont conçues de telle sorte que, par un éclairage par l'arrière de la plaque de support (10) par les éléments lumineux, la forme respective des signes (14) est rendue visible à la surface de la plaque de support (10), la disposition des éléments lumineux n'ayant d'influence que sur l'homogénéité et l'intensité lumineuse, et la plaque de support (10) étant rétroéclairée par l'arrière et revêtue d'une couche étanche à la lumière, notamment imprimée, à l'exception des sections translucides, et les sections translucides comprenant la forme des signes (14).

12. Balance (2) selon l'une des revendications précédentes, **caractérisée en ce que** la balance (2) comprend au moins trois, de préférence quatre cellules de pesée et plusieurs zones (8), l'entrée d'une commande de l'utilisateur par une pression exercée localement sur les zones (8) et une détermination par le calcul de la zone (8) concernée, dans laquelle la pression s'est produite, est calculée par l'intermédiaire des signaux respectifs des cellules de pesage, et les zones (8) sont représentées par l'intermédiaire des moyens lumineux par l'affichage de limites de zones sous la forme de signes (14) réalisés sous forme de marquages et/ou de leur fonction associée par l'affichage du signe (14) réalisé sous forme de symbole ou de lettre.

13. Balance (2) selon l'une des revendications précédentes, **caractérisée en ce qu'**il est prévu des moyens pour détecter l'entrée d'instructions de l'utilisateur, qui détectent comme grandeur d'entrée un contact ou un actionnement par l'utilisateur d'une ou de plusieurs zones (8) du panneau de commande (6) et qui évaluent et/ou traitent la grandeur d'entrée par l'intermédiaire d'une électronique d'évaluation en fonction de la fonction mémorisée dans une zone d'entrée, les moyens pour détecter l'entrée d'instructions de l'utilisateur pouvant être activés et une activation pouvant être prévue indépendamment de l'allumage des éléments lumineux.

14. Balance (2) selon l'une des revendications précédentes, **caractérisée en ce que** les moyens d'éclairage transmettent la lumière par l'intermédiaire d'un guide de lumière qui est formé par la plaque de support (10), les moyens d'éclairage sont prévus dans ou sur le côté de la plaque de support (10) et la lumière est couplée dans la plaque de support (10) lorsque les moyens d'éclairage sont activés, la plaque de support (10) présentant, pour la représentation du signe (14), des points de perturbation définis sur lesquels la lumière se réfracte, de sorte que le signe (14) peut être représenté sous la forme d'une ligne ou d'un symbole.
